(19) Europäisches Patentamt / European Patent Office / Office européen des brevets

(11) **EP 2 591 348 B1**

(12) **FASCICULE DE BREVET EUROPEEN**

(45) Date de publication et mention de la délivrance du brevet:
**25.10.2017 Bulletin 2017/43**

(21) Numéro de dépôt: **11743291.4**

(22) Date de dépôt: **05.07.2011**

(51) Int Cl.:
*G01N 29/07* (2006.01)    *F16L 58/10* (2006.01)
*F17D 5/06* (2006.01)    *G01M 3/24* (2006.01)

(86) Numéro de dépôt international:
**PCT/FR2011/051574**

(87) Numéro de publication internationale:
**WO 2012/004508 (12.01.2012 Gazette 2012/02)**

(54) **PROCÉDÉ DE CONTROLE DE L'INTEGRITÉ D'UNE CONDUITE TUBULAIRE FLEXIBLE ET DISPOSITIF POUR SA MISE EN OEUVRE**

VERFAHREN ZUM TESTEN DER UNVERSEHRTHEIT EINER BIEGSAMEN ROHRLEITUNG UND VORRICHTUNG ZUR UMSETZUNG DES VERFAHRENS

METHOD FOR TESTING THE INTEGRITY OF A FLEXIBLE TUBULAR PIPE AND DEVICE FOR IMPLEMENTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2010 FR 1055557**

(43) Date de publication de la demande:
**15.05.2013 Bulletin 2013/20**

(73) Titulaires:
 • **IFP Énergies nouvelles**
 **92852 Rueil-Malmaison Cedex (FR)**
 • **Technip France**
 **92400 Courbevoie (FR)**

(72) Inventeurs:
 • **KLOPFFER, Marie-Hélène**
 **F-78180 Montigny-le-Bretonneux (FR)**
 • **LEFEBVRE, Xavier**
 **F-78700 Conflans-Sainte-Honorine (FR)**
 • **NICOLAS, Yann**
 **F-38000 Grenoble (FR)**
 • **JUNG, Patrice**
 **F-76940 La Mailleraye sur Seine (FR)**

(74) Mandataire: **Gendron, Vincent Christian et al**
 **Fédit-Loriot**
 **38, avenue Hoche**
 **75008 Paris (FR)**

(56) Documents cités:
EP-A1- 0 844 429    WO-A1-2009/106078
FR-A1- 2 835 317    GB-A- 2 462 078
US-A- 5 038 615    US-A- 5 225 148
US-A1- 2007 193 357    US-A1- 2009 064 770
US-B1- 6 378 375

**Description**

La présente invention concerne le domaine du contrôle des conduites tubulaires destinées notamment à l'industrie pétrolière offshore, par exemple au transport des hydrocarbures. Il s'agit plus particulièrement de contrôler l'intégrité d'une telle conduite vis-à-vis de l'action des fluides agressifs, notamment des gaz corrosifs, par exemple l'$H_2S$ et le $CO_2$ présents dans les hydrocarbures transportés par la conduite.

L'invention vise notamment les conduites flexibles sous-marines destinées à transporter des hydrocarbures dont la pression et la température peuvent respectivement atteindre 1000 bar et 130°C. Une telle conduite flexible, sous sa forme générale, est bien connue de l'homme du métier et présente des configurations variées en fonction de son utilisation précise mais répond en général aux critères constructifs définis notamment dans les normes API 17 RP B et API 17J établies par l'American Petroleum Institute sous l'intitulé "Recommended Practice for Flexible Pipe" and "Specification for Unbonded Flexible Pipe".

Un type courant de telles conduites flexibles pétrolières comprend de l'intérieur vers l'extérieur : une carcasse interne en feuillard agrafé destinée à éviter l'écrasement de la conduite, une gaine interne d'étanchéité en matériau thermoplastique extrudable, généralement polymérique, s'appuyant sur la carcasse et destinée à assurer l'étanchéité interne de la conduite, un ensemble de couches d'armures métalliques destinées à résister aux efforts de pression et/ou de traction, et une gaine de protection et d'étanchéité externe en matériau thermoplastique, généralement polymérique.

Un problème inhérent au transport d'hydrocarbures dans ces conduites, en particulier à température et pression élevées, est lié à la perméabilité aux fluides corrosifs de la gaine d'étanchéité interne. En effet, les gaz tels que le $H_2S$, ont la propriété de diffuser à travers les thermoplastiques utilisés pour fabriquer les gaines d'étanchéité et on sait que le débit de gaz à travers les thermoplastiques augmente avec la température et la pression. Or, le $H_2S$ est un gaz corrosif pour les aciers au carbone non alliés ou faiblement alliés, avec lesquels sont usuellement fabriquées les différentes couches d'armures métalliques présentes dans la cavité l'annulaire de la conduite située entre les deux gaines d'étanchéité interne et externe. Par conséquent, lorsque de tels gaz corrosifs diffusent à travers la gaine d'étanchéité interne et pénètrent dans la cavité annulaire située entre les gaines d'étanchéité interne et externe, les couches d'armures métalliques de la conduite peuvent dans certaines conditions subir un phénomène de corrosion qui peut à terme devenir critique pour l'intégrité de la conduite.

Une des solutions envisagées pour résoudre ce problème de corrosion consiste à intercaler entre l'hydrocarbure circulant dans la conduite et les couches d'armures métalliques une gaine en matériau polymère incorporant un composé réactif dispersé dans ce matériau polymère, ce composé réactif étant apte à réagir avec les gaz acides pour les neutraliser. De cette manière, la gaine est étanche vis-à-vis des gaz considérés.

Le document EP0844429 décrit une telle solution. La couche barrière étanche est une gaine extrudée en polyéthylène chargée avec de fines particules d'oxyde de zinc ZnO. Ce composé réactif ZnO est apte à réagir avec le $H_2S$ pour le neutraliser sous forme de ZnS qui reste piégé dans la gaine et d'eau $H_2O$ qui est diffusée à travers la gaine. Cette solution s'avère très efficace tant qu'il reste du composé réactif dans la couche barrière. Cependant, elle présente l'inconvénient d'avoir une durée de vie limitée, puisqu'elle perd son efficacité dès lors que la totalité du composé réactif ZnO a réagi avec le $H_2S$. A partir de ce moment là, le $H_2S$ peut diffuser librement à travers la couche barrière et atteindre les couches d'armures métalliques de la conduite flexible. Le phénomène de corrosion des couches d'armures métalliques peut alors s'accélérer fortement ce qui risque d'affecter significativement la durée de vie résiduelle de la conduite. En effet, les armures métalliques de ces conduites ne sont pas conçues pour résister durablement au niveau de corrosion qu'elles auraient à endurer en l'absence de la couche barrière, de sorte que si cette couche barrière perdait anormalement et prématurément son étanchéité, la durée de vie résiduelle de la conduite serait significativement raccourcie.

Bien que la durée de vie d'une telle couche barrière puisse être évaluée grâce un modèle physique théorique validé par des essais expérimentaux, il est néanmoins souhaitable d'instrumenter la conduite flexible avec des moyens permettant non seulement de vérifier en temps réel le bon fonctionnement de la couche barrière, mais aussi d'anticiper précisément sa durée de vie résiduelle. En effet, le remplacement d'une conduite est une opération très lourde, qui nécessite l'arrêt de la production et qui est susceptible d'engendrer des surcoûts très importants si elle n'est pas correctement anticipée et planifiée.

Il est connu du document WO2009/106078 une méthode de contrôle d'une conduite du type précité, basée sur une analyse de la composition chimique des fluides présents dans la cavité annulaire entre les gaines interne et externe de la conduite, à l'aide de techniques spectroscopiques. La méthode décrite dans ce document permet ainsi de pouvoir détecter efficacement la présence de gaz corrosifs provenant des hydrocarbures transportés par la conduite et ayant pénétrés dans la cavité annulaire à travers la gaine d'étanchéité interne, moyennant quoi un problème de sécurité de la conduite peut être rapidement diagnostiqué.

Toutefois, cette méthode de contrôle de la conduite n'est pas totalement satisfaisante dans la mesure où, si elle permet de poser un diagnostic sur un risque immédiat de corrosion accélérée des armures métalliques de la conduite, en cas d'information fournie sur la présence de gaz corrosifs dans la cavité annulaire, elle ne permet pas, en revanche, d'anticiper la survenue de ce problème. En effet, la mesure ayant lieu dans l'annulaire, lorsque des gaz corrosifs sont détectés, ils sont déjà en contact avec les armures métalliques et un phénomène de corrosion peut donc, dans certaines conditions, avoir déjà commencé.

Dans ce contexte, la présente invention a pour but de proposer un procédé et un dispositif de contrôle d'une conduite du type précité répondant à ce besoin et qui puissent fournir une indication précoce sur la durée de vie résiduelle de la conduite.

L'invention atteint son but en proposant un procédé de contrôle d'une conduite tubulaire destinée au transport d'hydrocarbures contenant des gaz corrosifs, ladite conduite comprenant au moins une gaine d'étanchéité interne en matériau polymère, dans laquelle lesdits gaz corrosifs sont aptes à diffuser radialement depuis une surface interne vers une surface externe de ladite gaine d'étanchéité interne selon un phénomène de diffusion radiale, ledit matériau polymère de ladite gaine d'étanchéité interne incorporant des éléments de composé réactif dispersés dans l'épaisseur de ladite gaine d'étanchéité interne et aptes à réagir avec lesdits gaz corrosifs afin de les neutraliser selon une réaction de neutralisation, ladite réaction de neutralisation et ledit phénomène de diffusion radiale formant d'une part, une première couche dans ladite gaine d'étanchéité interne, dans laquelle lesdits éléments de composé réactif ont réagi avec lesdits gaz corrosifs, ladite première couche s'étendant progressivement dans l'épaisseur de ladite gaine d'étanchéité interne à partir de ladite surface interne et, d'autre part, une seconde couche d'épaisseur résiduelle de ladite gaine d'étanchéité interne, dans laquelle lesdits éléments de composé réactif n'ont pas encore réagi avec lesdits gaz corrosifs, ladite seconde couche s'étendant entre ladite première couche et ladite surface externe de ladite gaine d'étanchéité interne, où l'on détermine par ultrasons la position d'une interface entre ladite première couche et ladite seconde couche d'épaisseur de ladite gaine d'étanchéité interne, de sorte à mesurer en temps réel la progression de la diffusion desdits gaz corrosifs dans l'épaisseur de ladite gaine d'étanchéité interne.

Lorsque des ondes ultrasonores rencontrent une interface délimitant deux milieux ayant des impédances acoustiques différentes, il y a réflexion et les ondes réfléchies donnent lieu à un écho, selon le principe de l'échographie ultrasonore, bien connu en imagerie médicale par exemple.

En application de ce principe, le procédé selon l'invention permet de localiser une interface représentant l'avancée d'un front de transformation des éléments de composé réactif dispersés dans l'épaisseur de la gaine selon une réaction chimique avec les gaz corrosifs diffusant progressivement dans l'épaisseur de la gaine, l'avancée de ce front de transformation de ces éléments de composé réactif servant alors de marqueur pour quantifier l'avancée des gaz corrosifs dans l'épaisseur de la gaine. Ce front de transformation, qui se situe au niveau de la surface interne de la gaine d'étanchéité interne en début de vie de la conduite, puis progresse dans l'épaisseur de la gaine au cours du temps, pour finir au niveau de sa surface externe lorsque la totalité des éléments de composé réactif a été consommée au cours de la réaction chimique avec les gaz corrosifs, délimite en effet avantageusement deux couches d'épaisseur au sein de la gaine d'étanchéité interne, respectivement une première couche s'étendant progressivement dans l'épaisseur de la gaine depuis sa surface interne et constituée par un mélange du matériau polymère et des produits de la réaction chimique des éléments de composé réactif avec les gaz corrosifs et une seconde couche d'épaisseur résiduelle s'étendant entre la première couche et la surface externe de la gaine et constituée par un mélange du matériau polymère et des éléments de composé réactif intacts, car non encore atteints par les gaz corrosifs.

Or, la mise en oeuvre du principe d'échographie ultrasonore rappelé ci-dessus à la détection et la localisation de l'interface entre ces deux couches d'épaisseur évoluant progressivement au sein de la gaine d'étanchéité interne, est de prime abord très surprenante pour l'homme du métier.

En effet, les matériaux constituant ces deux couches d'épaisseur ont des propriétés mécaniques très proches de celles du matériau polymère constituant la gaine et sont donc très proches entre elles, compte tenu des faibles teneurs des produits issus de la réaction chimique et des éléments de composé réactif respectivement présents dans les premières et secondes couches. Il est a priori clair que des propriétés mécaniques aussi proches ne devraient alors pas permettre d'envisager, sur la base des connaissances usuelles, qu'une transition entre les matériaux constituant ces deux couches d'épaisseur dans la gaine puisse générer un écho ultrasonore permettant de détecter et de localiser une quelconque interface entre ces deux couches et écartent donc l'homme du métier de songer à l'emploi d'une méthode échographique ultrasonore pour cela. Ainsi, on connaît par exemple du document FR 2 835 517 un procédé de contrôle par ultrasons d'une gaine tubulaire en matériau polymère, destinée aux conduites de transport d'hydrocarbures, mais seulement pour détecter des défauts d'extrusion tels que les bulles d'air et les inclusions dans ladite gaine. On connaît aussi du document GB 2 462 078 un procédé de contrôle par ultrasons d'une conduite tubulaire destinée au transport des hydrocarbures, ladite conduite comprenant une gaine d'étanchéité interne en matériau polymère, qui n'est cependant pas du type incorporant des éléments réactifs aptes à réagir avec des gaz corrosifs afin des les neutraliser.

Selon l'invention, il a été découvert que la réaction chimique d'éléments de composé réactif dispersés dans l'épaisseur de la gaine avec les gaz corrosifs diffusés dans la gaine, en formant une première couche s'étendant progressivement dans l'épaisseur de la gaine à partir de sa surface interne, suffit néanmoins à modifier suffisamment les propriétés mécaniques de cette première couche de la gaine par rapport à celles de la seconde couche d'épaisseur résiduelle de la gaine s'étendant entre cette première couche et la surface externe de la gaine, de sorte qu'on peut valablement recourir à une méthode de contrôle par ultrasons pour détecter et localiser l'interface entre ces deux couches et ainsi quantifier en temps réel l'avancée du front de transformation des éléments de composé réactif révélant l'avancée de la diffusion des gaz corrosifs dans l'épaisseur de la gaine, moyennant quoi il est possible de prévoir la durée de vie résiduelle de la conduite.

Pour ce faire, on émet, depuis la face externe de la gaine d'étanchéité interne en direction de l'intérieur de la conduite, un faisceau ultrasonore, de manière que le faisceau ultrasonore traverse l'épaisseur de la gaine d'étanchéité interne entre sa surface externe et sa surface interne, on recueille des ondes ultrasonores réfléchies dans l'épaisseur de la gaine par ladite interface, sous forme de signaux, et on traite les signaux pour effectuer la détermination de la position de ladite interface dans l'épaisseur de ladite gaine d'étanchéité interne.

Avantageusement, la fréquence centrale du faisceau ultrasonore est comprise entre 1 et 5MHz, préférentiellement entre 1,5 et 3 MHz, avantageusement entre 2 et 2,5 MHz, plus avantageusement de l'ordre de 2,25 MHz. Avantageusement, la largeur d'impulsion, mesurée à -20 dB, est comprise entre 0,5 et 1,5 $\mu$s, avantageusement inférieure à 1 $\mu$s. Avantageusement, la bande passante, mesurée à -6 dB, est comprise entre 1 et 4 MHz, et on utilise un spectre comportant une part suffisante d'ondes à basse fréquence de l'ordre de 1 MHz dont la différence d'amplitude par rapport à la fréquence centrale ne doit pas être inférieur à 30 dB.

Avantageusement encore, la forme du faisceau ultrasonore est focalisée et on règle la position du point de focalisation vers ou au-delà le fond de ladite gaine d'étanchéité interne.

Le traducteur ultrasonore, de type piézo-électrique, est de préférence de type piézocomposite. Dans ce cas, il est avantageux que la focalisation soit obtenue par mise en forme du composant piézocomposite lui-même.

On utilise avantageusement une mosaïque de traducteurs élémentaires sous forme de motif à deux dimensions carré ou annulaire. Dans ce cas, le faisceau ultrasonore est de préférence géré par une technique de déphasage électronique.

En outre, avantageusement, le composé réactif est choisi parmi le Zn0, PbO, CuO, CdO, NiO, $SnO_2$ et $MoO_3$.

Selon un premier mode de réalisation de l'invention, la conduite tubulaire peut être une conduite flexible. Le terme gaine d'étanchéité interne doit alors être interprété avec un sens large et peut désigner n'importe quelle gaine interne étanche de la conduite flexible. Les éléments de composé réactif peuvent en effet être incorporés soit dans la première gaine étanche en partant de l'intérieur de la conduite, soit dans une gaine intermédiaire située entre d'une part, cette première gaine étanche et, d'autre part, la gaine externe.

Selon un deuxième mode de réalisation de l'invention, la conduite tubulaire peut être une conduite rigide, et notamment une conduite rigide comportant une gaine interne polymérique étanche entourée d'un tube métallique. La gaine polymérique étanche a pour fonction de chemiser l'intérieur de la conduite métallique afin de la protéger de la corrosion. Ce type de conduite est notamment décrit dans le document WO00/77587. La protection conférée par la gaine interne polymérique étanche formant chemise interne (liner en anglais) peut être améliorée en incorporant un agent réactif dans le matériau polymère constituant ladite chemise. Dans ce cas, la présente invention permet de contrôler l'avancée de la diffusion des gaz acides à l'intérieur du liner et d'anticiper le moment où les gaz vont atteindre la paroi interne du tube métallique.

L'invention concerne aussi une manchette de contrôle apte à être raccordée en série à une conduite tubulaire destinée au transport d'hydrocarbures contenant des gaz corrosifs, comprenant de l'intérieur vers l'extérieur, plusieurs couches coaxiales et notamment au moins une gaine d'étanchéité interne, et un capot cylindrique métallique monté autour de ladite gaine d'étanchéité interne, ladite gaine d'étanchéité interne étant réalisée en un matériau polymère incorporant des éléments de composé réactif dispersés dans l'épaisseur de ladite gaine et aptes à réagir avec des gaz corrosifs afin de les neutraliser, lesdits gaz corrosifs étant aptes à diffuser radialement depuis une surface interne vers une surface externe de ladite gaine d'étanchéité interne en formant d'une part, une première couche dans laquelle lesdits éléments de composé réactif ont réagi avec lesdits gaz corrosifs, ladite première couche s'étendant progressivement dans l'épaisseur de ladite gaine à partir de ladite surface interne et, d'autre part, une seconde couche d'épaisseur résiduelle de ladite gaine, dans laquelle lesdits éléments de composé réactif n'ont pas encore réagi avec lesdits gaz corrosifs, ladite seconde couche s'étendant entre ladite première couche et ladite surface externe de ladite gaine, ladite manchette de contrôle comprenant aussi un traducteur ultrasonore intégré apte à déterminer par ultrasons la position d'une interface entre ladite première couche et ladite seconde couche d'épaisseur de ladite gaine, de sorte à mesurer en temps réel la progression de la diffusion desdits gaz corrosifs dans l'épaisseur de ladite gaine d'étanchéité interne.

Il est difficile d'intégrer directement un capteur ultrasonore dans une conduite pétrolière de grande longueur particulièrement lorsque cette dernière est une conduite flexible comportant de nombreuses couches. Il est ainsi plus simple de réaliser une manchette instrumentée de courte longueur, en prenant soin que cette manchette ait une structure représentative de la conduite principale pour ce qui est des phénomènes de diffusion et de neutralisation des gaz acides, et de raccorder ensuite cette manchette en série avec la conduite principale flexible ou rigide, de façon à former une conduite de transport selon la présente invention.

De préférence, le traducteur ultrasonore est logé dans le capot cylindrique métallique, l'épaisseur résiduelle du capot entre la face avant du traducteur et la surface externe de la gaine d'étanchéité interne étant supérieure à au moins trois fois l'épaisseur de ladite gaine.

Avantageusement, on prévoit des premiers moyens de couplage de la face avant du traducteur ultrasonore avec le capot cylindrique métallique et des deuxièmes moyens de couplage entre la surface externe de la gaine d'étanchéité interne et le capot cylindrique métallique.

Avantageusement, les deuxièmes moyens de couplage comprennent des moyens de couplage mécanique sous pression de la surface externe de la gaine d'étanchéité interne avec une surface interne du capot cylindrique métallique.

Le capot cylindrique métallique peut comprendre un circuit de drainage des gaz diffusant à travers la gaine d'étanchéité interne, ledit circuit de drainage comprenant un ensemble de rainures formées sur une surface interne dudit capot au niveau d'une interface avec une surface externe de la gaine d'étanchéité interne, ledit ensemble de rainures étant relié à une ouverture apte à être fermée par un moyen d'obturation amovible et communiquant vers l'extérieur de ladite manchette de contrôle, moyennant quoi la pression à laquelle est soumise ladite gaine d'étanchéité interne peut être contrôlée.

Avantageusement, la manchette de contrôle comprend deux brides de connexion, montées respectivement de part et d'autre dudit capot cylindrique métallique et sur lesquelles sont adaptés à venir prendre appui des cônes de sertissage de ladite gaine d'étanchéité interne.

L'invention concerne encore une conduite destinée au transport d'hydrocarbures contenant des gaz corrosifs, ladite conduite comportant au moins une manchette de contrôle selon l'invention et étant caractérisée en ce que ladite conduite comprend au moins une gaine d'étanchéité interne similaire à celle montée dans ladite manchette de contrôle, moyennant quoi on peut surveiller la progression de la diffusion des gaz corrosifs dans l'épaisseur de ladite gaine d'étanchéité interne de ladite conduite.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 est une vue partielle en perspective d'un exemple de réalisation de conduite flexible utilisable pour le transport d'hydrocarbures;
- la Figure 2 est une vue schématique en coupe longitudinale d'une gaine d'étanchéité interne contrôlée selon l'invention et d'un traducteur de contrôle ultrasonore;
- la Figure 3 est un exemple d'échogramme obtenu lors du contrôle de la gaine par le procédé selon l'invention;
- la Figure 4 représente le spectre d'émission du faisceau ultrasonore utilisé;
- la Figure 5 représente en coupe longitudinale, une manchette de contrôle de conduite, destinée à être disposée en série avec la conduite flexible et instrumentée conformément à l'invention;
- les Figures 6a et 6b illustrent deux exemples de configurations possibles de mosaïques de transducteurs élémentaires pouvant convenir pour la réalisation du traducteur ultrasonore équipant la manchette de contrôle conformément à l'invention ;
- la Figure 7 représente un exemple d'installation de conduite sous-marine dans laquelle est mise en oeuvre la manchette instrumentée conformément à l'invention.

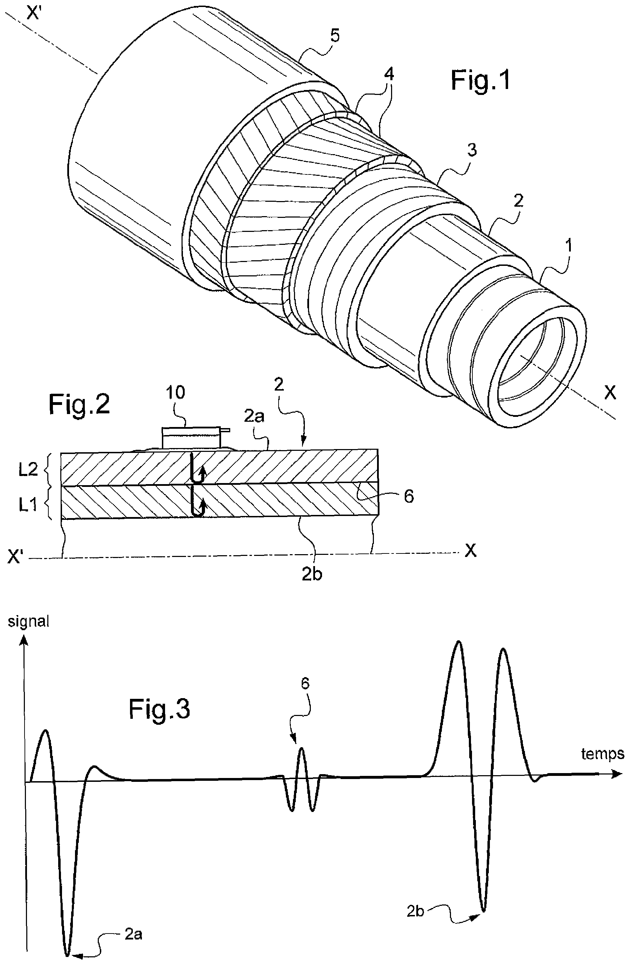

La Figure 1 représente une conduite flexible 10 à passage non lisse, connue sous le nom anglais de « rough bore », comprenant, de l'intérieur vers l'extérieur, une carcasse interne 1 en feuillard métallique ou en film de forme, à spires agrafées enroulées à pas cour, destiné à empêcher l'écrasement de la conduite sous la pression externe; au moins une gaine 2 d'étanchéité interne en matériau polymère, ou gaine de pression; un ensemble structurel d'armures métalliques comprenant ici une voûte de pression 3 et des couches d'armures de traction 4; et la gaine de protection et d'étanchéité extérieure 5.

L'invention ne dépend pas de la configuration précise de la conduite, elle peut être mise en oeuvre sur d'autres types de conduites que ceux illustrés sur la figure 1, par exemple sur une conduite flexible à passage interne lisse (dite « smooth bore ») où le passage est directement formé par la gaine d'étanchéité interne, sans carcasse à l'intérieur de celle-ci. Ainsi, la description de la conduite n'est donnée qu'à titre indicatif d'un mode de réalisation possible sur lequel peut être mise en oeuvre l'invention.

La gaine 2 d'étanchéité interne est réalisée en matériau plastique extrudable, généralement polymère, par exemple en polyéthylène, polyoléfine, polyamide ou en un polymère fluoré.

Selon l'invention, la gaine 2 comprend une quantité déterminée d'un composé réactif, apte à réagir chimiquement avec les gaz corrosifs présents dans les hydrocarbures transportés et susceptible de diffuser radialement à travers la gaine interne depuis sa surface interne vers sa surface externe, de façon à servir de marqueur à l'avancée des gaz corrosifs dans la gaine, comme il sera expliqué plus en détail par la suite.

L'invention se fonde sur les réactions chimiques connues et pratiquées dans le domaine des procédés d'épuration des gaz corrosifs, notamment résultant de la présence de $H_2S$ et de $CO_2$, mais nullement utilisées aux fins de surveiller la diffusion des gaz corrosifs dans l'épaisseur d'une gaine dans le domaine des conduites flexibles d'exploitation d'hydrocarbures.

Parmi les composés réactifs utilisables aux fins de l'invention, on peut citer ceux comportant des oxydes métalliques tels le ZnO, qui réagit avec le $H_2S$ selon la réaction suivante :

$$ZnO + H_2S \rightarrow ZnS + H_2O \qquad (1)$$

Parmi d'autres composés réactifs du même type, on peut encore citer par exemple le PbO, CuO, CdO, NiO, $SnO_2$, $MoO_3$ et les formes carbonatées associées.

Ainsi, selon un exemple de réalisation, la gaine d'étanchéité interne 2 est fabriquée à partir d'un mélange préparé à la température de fusion de polyéthylène par ajout du composé réactif, par exemple un oxyde métallique, de type ZnO, avant extrusion. De cette manière, la gaine d'étanchéité interne 2 en polyéthylène contient du composé réactif, par exemple un oxyde métallique, dispersé dans toute l'épaisseur de la gaine.

Le principe sur lequel repose l'invention est alors de détecter et localiser l'interface entre le composé réactif, par exemple le ZnO, et le composé réactif ayant réagi avec l'$H_2S$, par exemple le ZnS, dans la gaine par une méthode d'échographie ultrasonore afin de mesurer l'avancée de la diffusion du gaz corrosif dans l'épaisseur de la gaine.

La figure 2 montre un détail de la gaine d'étanchéité interne 2 en polyéthylène (PE) contenant le composé réactif, par exemple du ZnO, dispersé dans son épaisseur. La gaine 2, symétrique autour de son axe longitudinal XX' coïncidant avec l'axe central de la conduite, est représentée en demi-coupe partielle. Un traducteur ultrasonore 10, instrumentant la conduite, est couplée à la gaine 2, de sorte à envoyer radialement à la conduite un faisceau ultrasonore traversant l'épaisseur de la gaine et qui est plus ou moins réfléchi par des obstacles et, notamment, par la surface externe 2a de la gaine (entrée de gaine), la surface interne de la gaine 2b (fond de gaine), ainsi que l'interface 6 entre le composé réactif, par exemple le ZnO, et le composé réactif ayant réagi avec l'$H_2S$, par exemple le ZnS, matérialisant l'avancée au cours du temps du front de transformation du ZnO en ZnS dans l'épaisseur de la gaine, depuis la surface interne 2b vers la surface externe 2a, sous l'effet de la diffusion des gaz corrosifs dans l'épaisseur de la gaine.

En effet, lorsque la conduite est en exploitation, les gaz corrosifs, tels que le $H_2S$, présents dans les hydrocarbures transportés par la conduite diffusent radialement depuis la surface interne 2a vers la surface externe 2b de la gaine d'étanchéité interne 2 et forment ainsi une couche L1 de gaz diffusés s'étendant progressivement dans l'épaisseur de la gaine à partir de la surface interne 2a, dans laquelle le composé réactif, par exemple le ZnO, réagit avec les gaz corrosifs diffusés selon la réaction chimique (1), tandis qu'une couche L2 d'épaisseur résiduelle de la gaine, où les gaz corrosifs n'ont pas encore diffusé, s'étend entre la couche L1 et la surface externe 2b de la gaine.

La couche d'épaisseur L1 est donc principalement constituée des matériaux PE et de composé réactif ayant réagi avec l'$H_2S$, par exemple le ZnS, ce dernier étant issu de la réaction chimique entre le ZnO et les gaz corrosifs diffusés, tandis que la couche d'épaisseur L2 est principalement constituée des matériaux PE et de composé réactif, par exemple le ZnO, ce dernier n'étant pas encore consommé par la réaction chimique en l'absence de diffusion des gaz corrosifs dans cette couche.

En conséquence de quoi, les deux couches d'épaisseur L1 et L2 de la gaine d'étanchéité interne présentent des impédances acoustiques respectives différentes, de sorte qu'il est possible de détecter l'interface 6 délimitant ces deux couches, par réflexion des ondes ultrasonores au niveau de cette interface et ainsi mesurer la progression de la diffusion du $H_2S$ dans le matériau PE + composé réactif constituant la gaine.

La quantité de composé réactif qu'il faut incorporer au polyéthylène pour fabriquer la gaine devra donc être déterminée de sorte à garantir une modification suffisamment notable des propriétés mécaniques entre d'une part, les matériaux PE + composé réactif et, d'autre part, les matériaux PE + composé réactif ayant réagi avec l'$H_2S$, pour pouvoir détecter l'interface de séparation de ces deux couches de matériaux dans la gaine par la méthode d'échographie ultrasonore.

Les signaux ultrasonores réfléchis dans l'épaisseur de la gaine d'étanchéité interne 2 apparaissent sur l'échogramme illustré en figure 3, donnant le signal retour reçu en fonction du temps dans le cas du mode de réalisation de la figure 2 d'une gaine fabriquée en PE et ZnO, avec un front de transformation du ZnO en ZnS progressant dans l'épaisseur de la gaine au cours du temps depuis sa surface interne 2b. Ces signaux ultrasonores réfléchis permettent la détermination des obstacles 2a, 2b et 6. On enregistre ainsi la position et l'amplitude des échos d'entrée de gaine 2a, de fond de gaine 2b et d'interface 6 matérialisant le front de transformation du ZnO en ZnS.

On notera l'existence d'une inversion de polarité entre l'écho de fond de gaine et l'écho d'interface. On pourra utiliser avantageusement cette particularité pour parvenir à une identification certaine de l'écho d'interface, même en présence d'un niveau de bruit important.

L'avancement du front de transformation du ZnO en ZnS et donc, la progression de la diffusion des gaz dans l'épaisseur de la gaine, peut ainsi être mesuré simplement en effectuant le rapport entre le temps de parcours mesuré au droit de l'écho d'interface du front et de celui mesuré au droit de l'écho de fond de la gaine. Ainsi, cette mesure est indépendante de la température si celle-ci est homogène dans l'épaisseur de la gaine.

La localisation des échos d'entrée et de fond de gaine permet aussi d'en contrôler l'épaisseur.

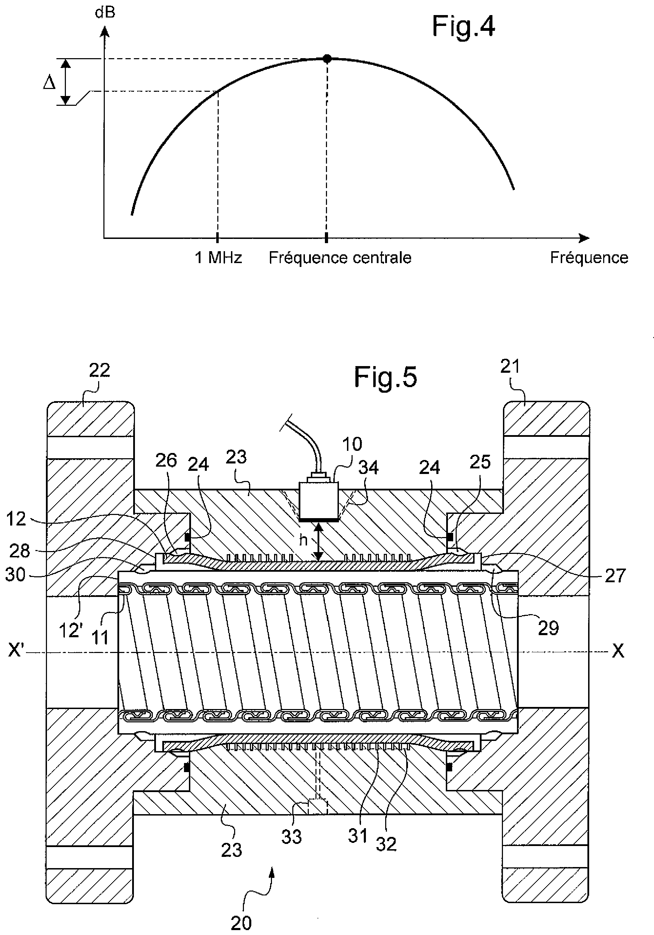

La figure 2 vise simplement à illustrer le principe de détection de l'interface ci-dessus et est par conséquent volontairement schématique, notamment en regard des détails de réalisation de l'instrumentation de la conduite avec le traducteur ultrasonore, qui seront fournis plus loin dans la description en référence à la figure 5 notamment.

Par ailleurs, on notera qu'il est déjà connu du document de brevet EP0844429 d'utiliser la réaction chimique (1) évoquée ci-dessus pour fabriquer des gaines d'étanchéité interne dans le domaine des conduite flexibles, dont l'objet est d'empêcher et, à tout le moins, de limiter la perméabilité de ces gaines aux fluides corrosifs tels que le H$_2$S. Il s'agit plus précisément d'utiliser la réaction chimique (1) dans la gaine d'étanchéité interne pour protéger les couches métalliques entourant cette gaine du H$_2$S, en neutralisant irréversiblement les effets corrosifs de ce gaz lors de sa diffusion dans la gaine.

A cet égard, on sait que la couche barrière constituée par la gaine fabriquée selon les principes du document EP0844429 a une durée de vie limitée puisqu'elle perd son efficacité dès lors que la totalité du composé réactif ZnO ajouté dans le matériau constituant la gaine a réagi avec les gaz corrosifs. Dès lors, en permettant de détecter la position de l'interface 6 du front de transformation entre le ZnO et le ZnS dans l'épaisseur de la gaine, l'invention permet de suivre en temps réel l'état de consommation du ZnO dans la gaine, moyennant quoi, on peut déterminer précisément la durée de vie résiduelle de la gaine formant barrière de protection anti-H$_2$S. Aussi, l'invention permet de conjuguer la protection offerte par la gaine à perméabilité limitée décrite dans le document EP0844429 et une capacité de surveillance au cours du temps de l'efficacité de cette couche barrière aux gaz corrosifs, permettant d'anticiper avec précision sa durée de vie résiduelle et donc celle de la conduite.

Le lecteur pourra se reporter utilement à ce document, notamment en ce qui concerne la quantité de composé réactif incorporée au matériau polymère extrudable pour se garantir de la perméabilité d'une gaine ainsi fabriquée, en fonction du type de gaine (diamètre, épaisseur, polymère), du type de composé réactif aux gaz corrosifs choisi et ceci en fonction de conditions de fonctionnement donnés.

La figure 3 montre le spectre du faisceau ultrasonore émis avec une fréquence centrale (telle que définie par la norme NFA 09-323) comprise entre 2 et 2,5 MHz et de préférence égale à 2,25 MHz. Des fréquences trop basses favorisent une atténuation faible mais au détriment de la sensibilité et si la fréquence est trop haute, l'atténuation fait que l'on ne peut pas traverser la gaine dans son intégralité lorsque son épaisseur est importante.

La largeur d'impulsion, mesurée à -20 dB (selon la même norme NFA 09-323) est inférieure ou égale à 1,5 $\mu$s : une impulsion brève permet une bonne détection près de la surface externe et une bonne résolution en profondeur. La largeur d'impulsion est de préférence supérieure à 0,5 $\mu$s pour être suffisamment énergique.

La bande passante, mesurée à -6dB, doit être comprise entre 1 et 4 MHz, de préférence entre 1,5 et 3,5 MHz.

Le spectre du faisceau émis doit également comporter une part suffisante d'ondes à basse fréquence de l'ordre de 1 MHz dont la différence d'amplitude $\Delta$ par rapport à la fréquence centrale ne doit pas être supérieure à 30 dB. Ces ondes à basse fréquence permettent en effet de favoriser la propagation du faisceau émis, en raison de leur moindre sensibilité à l'atténuation dans le matériau de la gaine. Le spectre et la largeur d'impulsion sont directement liés et dépendent de l'amortissement du traducteur.

La figure 5 illustre un mode de réalisation pour la mise en oeuvre de la méthode de contrôle destinée à surveiller et quantifier la progression de la diffusion des gaz dans la gaine d'étanchéité interne d'une conduite flexible en exploitation. Selon ce mode de réalisation, il est prévu d'instrumenter une manchette de contrôle 20 avec un traducteur ultrasonore 10 et de connecter en série cette manchette de contrôle 20 avec un embout de fixation de la conduite au niveau de l'extrémité supérieure de celle-ci.

Plus précisément, la manchette de contrôle 20, symétrique autour de son axe longitudinal XX' coïncidant avec l'axe central de la conduite flexible, comprend deux brides de connexion 21 et 22, montées respectivement de part et d'autre d'un capot cylindrique métallique 23 par l'intermédiaire d'un joint 24, de sorte à former un ensemble étanche. Ces brides de connexion 21 et 22 sont destinées à la connexion avec des embouts de conduite ou avec des équipements terminaux. La portion de conduite intégrée à la manchette de contrôle est représentée par sa carcasse 11 et sa gaine d'étanchéité interne 12, chargée en composé réactif ZnO dispersé dans son épaisseur. La gaine d'étanchéité interne 12 est sertie à chacune de ses deux extrémités dans la manchette grâce à des pièces appelées cônes de sertissage, respectivement 25 et 26, qui viennent glisser et prendre appui contre une portée conique des brides de connexion correspondantes, respectivement 21 et 22, et mordre dans la gaine d'étanchéité interne 12, soutenue à ces endroits par des canules effilées, respectivement 27 et 28. Une gaine de pression étanche 12' passant sous les canules 27 et 28 est disposée entre la carcasse 11 et la gaine d'étanchéité interne 12. Cette gaine de pression 12' est elle-même sertie à chacune de ses extrémités par l'intermédiaire de deux cônes de sertissage, respectivement 29 et 30, qui viennent mordre dans la gaine de pression 12' soutenue par la carcasse 11. Dans cet exemple, la gaine d'étanchéité interne 12 chargée en composé réactif est distincte de la gaine de pression 12', la gaine de pression 12' étant par définition la première gaine étanche en partant de l'intérieur. L'invention pourrait naturellement être appliquée à des conduites dans lesquelles ces deux gaines sont confondues.

La portion de conduite flexible montée dans la manchette de contrôle 20 est par exemple prélevée lors de la fabrication de la conduite flexible en série de laquelle la manchette est destinée à être raccordée, en bout de conduite flexible. Cette portion prélevée en bout de conduite flexible est ensuite débarrassée de ses couches d'armures métalliques (voûte de pression et couches d'armures de traction) et de la gaine de protection et d'étanchéité extérieure, pour être montée dans la manchette de contrôle comme expliqué ci-dessus. De cette manière, la manchette de contrôle 20 présente une structure de conduite flexible, en ce qui concerne la gaine d'étanchéité interne contrôlée, identique à celle de la conduite flexible sur laquelle elle est destinée à venir se raccorder, permettant ainsi de fournir un environnement de mesure pour le traducteur ultrasonore 10 instrumentant la manchette représentatif de celui de la conduite flexible.

En outre, le capot cylindrique métallique 23 de la manchette de contrôle 20 est muni d'un ensemble de rainures 31 sur sa surface interne au niveau de l'interface avec la surface externe de la gaine d'étanchéité interne 12, sauf au droit de la position du traducteur ultrasonore 10, de manière à simuler la présence des déjoints dans la voûte de pression. De la sorte, la gaine d'étanchéité interne 12 de la manchette de contrôle 20 est placée dans les mêmes conditions que s'il y avait une voûte de pression autour d'elle. L'ensemble de rainures 31 est relié par une rainure longitudinale 32 à une ouverture 33 apte à être fermée par un moyen d'obturation amovible et communiquant vers l'extérieur, l'ensemble formant avantageusement un circuit de drainage pour les gaz diffusant à travers la gaine d'étanchéité interne 12, par l'intermédiaire duquel la pression à laquelle est soumise la gaine d'étanchéité interne 12 de la manchette de contrôle peut être contrôlée.

La manchette de contrôle 20 peut encore être équipée de moyens de chauffage et de contrôle de la température, non représentés, disposés sensiblement autour du capot cylindrique métallique 23 et permettant de réguler et de contrôler la température à laquelle est soumise la portion de conduite flexible montée dans la manchette, en particulier la gaine d'étanchéité interne 12. Ces moyens peuvent par exemple comporter des résistances chauffantes. Ils peuvent permettre par exemple de placer la portion de conduite intégrée dans la manchette de contrôle dans des conditions de température les plus représentatives du point le plus défavorable en termes d'influence de la température sur le phénomène de diffusion des gaz dans la gaine d'étanchéité interne, qui est typiquement situé au niveau de la tête de puits, au pied de l'installation de conduite flexible, où la température du fluide transporté est la plus élevée.

Ainsi, on peut reproduire au niveau de la portion de conduite de la manchette de contrôle instrumenté un environnement de mesure, notamment en termes de pression et de température élevées, similaire à celui rencontré par la gaine d'étanchéité interne de la conduite flexible, dont on cherche à contrôler par échographie ultrasonore l'intégrité vis-à-vis de la diffusion des gaz corrosifs à travers ladite gaine.

Concernant le traducteur ultrasonore 10, ce dernier est logé dans le capot cylindrique métallique 23 et disposé à une distance h de la surface externe de la gaine d'étanchéité interne 12, de manière à pouvoir détecter et observer la progression de la diffusion des gaz dans la gaine 12 de la portion de conduite, selon les principes exposés plus haut. Par exemple, le traducteur 10 est vissé dans le capot cylindrique métallique. Il est nécessaire de prévoir une épaisseur d'acier du capot 23 suffisante pour résister à la pression interne présente au droit du traducteur ultrasonore.

Par ailleurs, un passage 34 est prévu pour assurer un premier moyen de couplage entre la face avant du traducteur ultrasonore et le capot cylindrique métallique dans lequel le traducteur est logé. De manière classique, ce couplage de la face avant du traducteur avec le capot peut être réalisé par l'injection d'un couplant de type gel ou huile. Les dimensions du passage 34 seront choisies de manière à assurer une bonne transmission des ultrasons entre le traducteur et le capot métallique cylindrique, tout en évitant de générer des phénomènes pouvant perturber la mesure par ultrasons. L'épaisseur du passage 34 au droit de la face avant du traducteur 10 est une caractéristique importante car elle détermine l'épaisseur du film de couplant que doit traverser le faisceau ultrasonore. En pratique, cette épaisseur de passage doit être avantageusement largement inférieure à la demi-longueur d'onde utilisée. A titre d'exemple, avec une fréquence centrale du traducteur égale à 2 MHz et une vitesse de propagation des ultrasons dans l'acier égale à environ 6000 m/s, la longueur d'onde dans l'acier correspond à $\lambda = c/N$, c étant la vitesse de propagation et N la fréquence, soit sensiblement 3mm. On pourra donc par exemple choisir de coupler la face avant du traducteur et le capot cylindrique métallique avec un film d'huile d'épaisseur de l'ordre du dixième de millimètre. En variante, ce couplage pourrait également être réalisé par le positionnement d'une fine rondelle en élastomère au fond du trou dans lequel est logé le traducteur ultrasonore.

Un deuxième moyen de couplage est également nécessaire entre le capot cylindrique métallique et la surface externe de la gaine d'étanchéité interne 12 chargée en ZnO. Ce deuxième moyen de couplage est avantageusement assuré par la seule pression interne générée par le fluide transporté par la portion de conduite flexible, de l'ordre de la centaine de bars. En effet, dès lors que le capot cylindrique métallique a bénéficié d'un usinage approprié pour présenter un état de surface sans rugosité, le couplage mécanique sous pression entre la surface interne du capot cylindrique métallique et la surface externe de la gaine d'étanchéité interne suffit pour obtenir une interface nette et donc un bon couplage, permettant de mettre en oeuvre la mesure par échographie ultrasonore. Aussi, l'invention exploite-t-elle avantageusement les conditions de fortes pressions à laquelle est soumise la conduite flexible en exploitation pour réaliser ce deuxième couplage entre la surface externe de la gaine d'étanchéité interne et la capot cylindrique métallique, qui s'avère nécessaire à la bonne mise en oeuvre de la mesure par ultrasons.

Ainsi, grâce à ces moyens de couplage entre la face avant du traducteur ultrasonore 10 et la surface externe de la gaine d'étanchéité interne 12, l'onde ultrasonore générée par la traducteur, via les moyens de couplage, traverse l'épaisseur résiduelle d'acier du capot cylindrique métallique au droit du traducteur, avant de pénétrer dans la gaine d'étanchéité interne chargée en ZnO. Au retour après réflexion sur le fond de la gaine d'étanchéité interne, l'onde ultrasonore effectue le même trajet en sens inverse.

En outre, pour obtenir un échogramme exploitable en vue du contrôle de la diffusion des gaz corrosifs dans la gaine, tel que celui décrit à la figure 3, il est avantageux de définir soigneusement la distance h à laquelle est située la face avant du traducteur 10 par rapport à la gaine d'étanchéité interne de la portion de conduite montée dans la manchette de contrôle. En particulier, la distance h doit être choisie de telle manière que l'écho de rebond des ultrasons sur la face avant du traducteur 10 soit capté après l'écho de fond de gaine, de manière à ne pas venir bruiter les échos auxquels on s'intéresse, notamment l'écho d'entrée de gaine, l'écho d'interface du front Zno/ZnS et l'écho de fond de gaine. Pour ce faire, on définit la distance h de la façon suivante

$$h \geq e \times \frac{V1}{V2}$$

Où:

e est l'épaisseur de la gaine d'étanchéité interne 12 ;
V1 est la vitesse de propagation des ultrasons dans le capot cylindrique métallique ; et
V2 est la vitesse de propagation des ultrasons dans la gaine d'étanchéité interne.

En pratique, V1 est de l'ordre de 6000m/s et V2 est de l'ordre 2000 m/s (cas du PE), si bien que l'épaisseur résiduelle d'acier h entre la face avant du traducteur et la surface externe de la gaine d'étanchéité interne doit être supérieure à au moins trois fois l'épaisseur de la gaine pour satisfaire à la condition précitée de propagation des ondes.

En outre, si l'on souhaite étendre le champ de mesure au-delà de la gaine d'étanchéité interne, jusqu'à la carcasse, on tiendra compte de l'épaisseur de la gaine sacrificielle 12' pour faire en sorte que les échos de rebond sur la face avant du traducteur arrivent après l'écho généré par la carcasse de sorte à obtenir un échogramme « propre » jusqu'à la carcasse.

Par ailleurs, une focalisation de l'onde ultrasonore émise est souhaitable pour améliorer le rapport signal à bruit de la réponse du traducteur. Le point de focalisation est le point où l'onde ultrasonore émise par le traducteur présente une intensité maximale. L'intensité va en diminuant au fur et à mesure que l'on s'éloigne du point de focalisation. La tache focale à -6 dB est par définition le volume entourant le point de focalisation dans lequel l'intensité ultrasonore reste au moins supérieure à 50% de l'intensité au niveau du point de focalisation. Un moyen connu pour mesurer les dimensions de la tache focale consiste à immerger le traducteur dans une cuve remplie d'eau et à déplacer dans le champ du traducteur une petite bille métallique faisant office de réflecteur ultrasonore. Pour chaque position relative de la bille par rapport au traducteur, on enregistre l'amplitude de l'écho ultrasonore renvoyé par la bille, cette amplitude étant proportionnelle à l'intensité de l'onde au niveau du point occupé par la bille. En déplaçant la bille selon 3 axes de façon à balayer tout le volume occupé par le faisceau ultrasonore, on détermine la position du point de focalisation et les limites à -6 dB de la tache focale.

Les traducteurs focalisés usuels ont une structure axisymétrique par rapport à l'axe du faisceau acoustique. La tache focale à -6dB de tels capteurs est elle aussi sensiblement axisymétrique par rapport à l'axe du faisceau acoustique, et présente généralement la forme d'un ellipsoïde de révolution. La largeur de la tache focale, encore appelée diamètre de la tache focale, est mesurée dans le plan focal, c'est-à-dire dans le plan perpendiculaire à l'axe du faisceau acoustique et passant par le point de focalisation. Selon l'invention, la largeur de la tache focale est avantageusement de l'ordre de quelques millimètres et est idéalement choisie entre 2 mm et 5 mm maximum. La longueur de la tache focale est mesurée le long de l'axe du faisceau acoustique. Selon l'invention la longueur de tache focale est choisie pour couvrir toute l'épaisseur de la gaine d'étanchéité interne 12. En fait, il est préférable de choisir une longueur de tache bien supérieure à l'épaisseur de la gaine, et de focaliser la tache vers le fond de la gaine, ou au-delà, de manière à couvrir largement toute la gaine et à être moins sensible aux variations de la distance entre le traducteur et la gaine. Le coefficient de focalisation acoustique sera choisi de manière à obtenir un rapport signal à bruit optimal pour l'application envisagée de contrôle de la diffusion des gaz corrosifs dans la gaine.

La focalisation peut être obtenue par des lentilles ultrasonores, par des miroirs de formes convenables, par la mise en forme du traducteur piézo-électrique, notamment s'il s'agit d'un traducteur ultrasonore de type piézocomposite, ou par une mosaïque de traducteurs élémentaires déphasés électroniquement (« phased array »).

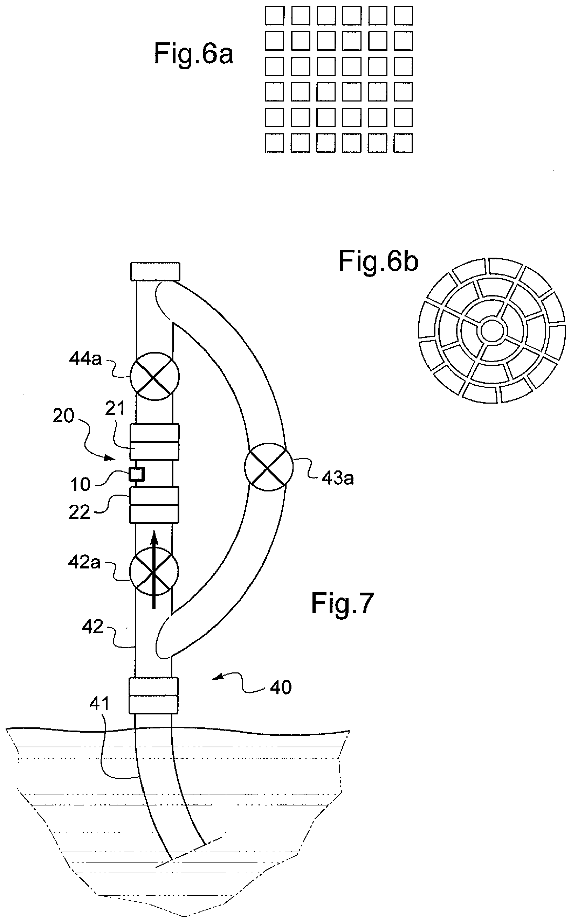

Les figures 6a et 6b illustrent deux configurations possibles de telles mosaïques de traducteurs élémentaires pouvant convenir pour la réalisation du traducteur ultrasonore 10, sous la forme respectivement d'un motif carré en deux dimensions et d'un motif annulaire segmenté en deux dimensions.

La figure 7 montre un exemple de disposition d'une manchette de contrôle 20, instrumentée comme expliqué ci-dessus, au niveau d'une installation de conduite flexible 40 de type liaison fond-surface entre un équipement de fond sous-marin comme par exemple une tête de puits et une unité de surface qui peut être constituée par une plate-forme flottante ou un navire. Selon cet exemple, l'installation de conduite sous-marine 40 comprend une conduite flexible verticale 41 dont l'extrémité inférieure est connectée à la tête de puits au fond de la mer et l'extrémité supérieure débouche en surface de la mer, une conduite de liaison 42, entre l'extrémité supérieure de la conduite flexible verticale 41 et l'unité de surface et une conduite de dérivation 43, dite conduite by-pass, entre l'extrémité supérieure de la conduite flexible verticale et l'unité de surface, en parallèle de la conduite de liaison 42. La manchette de contrôle 20 équipé du traducteur ultrasonore 10 pour la mise en oeuvre du procédé selon l'invention est raccordée en série avec la conduite de liaison 42 par l'intermédiaire de ses deux brides de connexion 21 et 22 fixées à des embouts de fixation correspondant de la conduite de liaison. De la sorte, le traducteur ultrasonore est facilement accessible, ce qui facilite notamment sa liaison avec une unité de traitement du signal. En outre, des vannes 42a, 43a et 44a permettent de réguler le passage du fluide dans le circuit de circulation de fluide formé par les différentes conduites de l'installation. En particulier, la portion de conduite de liaison intégrant la manchette de contrôle 20 peut être isolée du circuit de circulation du fluide en fermant les vannes 42a et 44a, tandis que la vanne 43a est ouverte pour permettre un passage du fluide à travers la conduite de dérivation 43. De cette manière, on peut intervenir sur la manchette de contrôle 20 pour des opérations de maintenance et/ou de contrôle du fonctionnement du traducteur.

En variante, on peut aussi prévoir d'intégrer directement le traducteur ultrasonore dans un des embouts de fixation de la conduite flexible. A cet effet, il est possible de loger le traducteur ultrasonore sous les armures à l'arrière de l'embout, du coté de la conduite flexible. On peut aussi rallonger l'embout du coté de la bride de façon à prolonger la gaine interne d'étanchéité au-delà de la zone d'ancrage des armures, et placer le traducteur ultrasonore au droit de la zone prolongée.

Pour ce qui concerne les conduites rigides comportant un liner interne, il est possible de les instrumenter en disposant directement le traducteur ultrasonore à l'extérieur du tube métallique entourant le liner, ledit tube métallique pouvant alors être assimilé au capot cylindrique métallique (23) de la figure 5.

## Revendications

**1.** Procédé de contrôle d'une conduite tubulaire destinée au transport d'hydrocarbures contenant des gaz corrosifs, ladite conduite comprenant au moins une gaine d'étanchéité interne (2) en matériau polymère, dans laquelle lesdits gaz corrosifs sont aptes à diffuser radialement depuis une surface interne (2b) vers une surface externe (2a) de ladite gaine d'étanchéité interne (2) selon un phénomène de diffusion radiale, ledit matériau polymère de ladite gaine (2) incorporant des éléments de composé réactif dispersés dans l'épaisseur de ladite gaine (2) et aptes à réagir avec lesdits gaz corrosifs afin de les neutraliser selon une réaction de neutralisation, ladite réaction de neutralisation et ledit phénomène de diffusion radiale formant d'une part, une première couche (L1) dans laquelle lesdits éléments de composé réactif ont réagi avec lesdits gaz corrosifs, ladite première couche (L1) s'étendant progressivement dans l'épaisseur de ladite gaine (2) à partir de ladite surface interne (2b) et, d'autre part, une seconde couche (L2) d'épaisseur résiduelle de ladite gaine (2), dans laquelle lesdits éléments de composé réactif n'ont pas encore réagi avec lesdits gaz corrosifs, ladite seconde couche (L2) s'étendant entre ladite première couche (L1) et ladite surface externe de ladite gaine (2), où l'on détermine par ultrasons la position d'une interface (6) entre ladite première couche (L1) et ladite seconde couche (L2), de sorte à mesurer en temps réel la progression de la diffusion desdits gaz corrosifs dans l'épaisseur de ladite gaine d'étanchéité interne (2).

**2.** Procédé de contrôle selon la revendication 1, **caractérisé en ce qu'**il consiste à émettre, depuis la face externe (2a) de ladite gaine d'étanchéité interne (2) en direction de l'intérieur de ladite conduite, un faisceau ultrasonore, de manière que le faisceau ultrasonore traverse l'épaisseur de ladite gaine d'étanchéité interne entre sa surface externe (2a) et sa surface interne (2b), à recueillir des ondes ultrasonores réfléchies dans l'épaisseur de ladite gaine par ladite interface (6), sous forme de signaux, et à traiter lesdits signaux pour effectuer la détermination de la position de ladite interface (6) dans l'épaisseur de ladite gaine d'étanchéité interne.

**3.** Procédé selon la revendication 2, **caractérisé en ce que** la fréquence centrale du faisceau ultrasonore est comprise entre 1,5 et 3 MHz, avantageusement entre 2 et 2,5 MHz, **en ce que** la largeur d'impulsion, mesurée à -20 dB est comprise entre 0,5 et 1,5 $\mu$s, avantageusement inférieure à 1 $\mu$s, **en ce que** la bande passante, mesurée à -6 dB est comprise entre 1 et 4 MHz, et **en ce qu'**on utilise un spectre comportant une part suffisante d'ondes à basse fréquence de l'ordre de 1 MHz dont la différence d'amplitude par rapport à la fréquence centrale ne doit pas être inférieure à 30 dB.

4. Procédé selon l'une quelconque des revendications 2 à 3, **caractérisé en ce que** la forme du faisceau ultrasonore est focalisée et **en ce qu'**on règle la position du point de focalisation vers ou au-delà du fond de ladite gaine d'étanchéité interne.

5. Procédé selon l'une quelconque des revendications précédentes, **caractérisé en ce qu'**on utilise un traducteur ultrasonore de type piézocomposite.

6. Procédé selon la revendication 4, **caractérisé en ce que** la focalisation est obtenue par mise en forme du composant piézocomposite lui-même.

7. Procédé selon l'une quelconque des revendications précédentes, **caractérisé en ce qu'**on utilise une mosaïque de traducteurs élémentaires sous forme de motif à deux dimensions carré ou annulaire.

8. Procédé selon la revendication 7, **caractérisé en ce que** le faisceau ultrasonore est géré par une technique de déphasage électronique.

9. Procédé selon l'une quelconque des revendications précédentes, **caractérisé en ce que** le composé réactif est choisi parmi le ZnO, PbO, CuO, CdO, NiO, $SnO_2$ et $MoO_3$.

10. Manchette de contrôle (20) apte à être raccordée en série à une conduite tubulaire destinée au transport d'hydrocarbures contenant des gaz corrosifs, comprenant de l'intérieur vers l'extérieur, au moins une gaine d'étanchéité interne (12) et un capot cylindrique métallique (23) monté autour de ladite gaine d'étanchéité interne (12), ladite gaine d'étanchéité interne (12) étant réalisée en un matériau polymère incorporant des éléments de composé réactifs dispersés dans l'épaisseur de ladite gaine et apte à réagir avec des gaz corrosifs afin de les neutraliser, lesdits gaz corrosifs étant aptes à diffuser radialement depuis une surface interne vers une surface externe de ladite gaine d'étanchéité interne en formant d'une part, une première couche dans laquelle lesdits éléments de composé réactif ont réagi avec lesdits gaz corrosifs, ladite première couche s'étendant progressivement dans l'épaisseur de ladite gaine (12) à partir de ladite surface interne et, d'autre part, une seconde couche d'épaisseur résiduelle de ladite gaine, dans laquelle lesdits éléments de composé réactif n'ont pas encore réagi avec lesdits gaz corrosifs, ladite seconde couche s'étendant entre ladite première couche et ladite surface externe de ladite gaine, ladite manchette de contrôle (20) comprenant aussi un traducteur ultrasonore (10) intégré apte à déterminer par ultrasons la position d'une interface entre ladite première couche et ladite seconde couche d'épaisseur de ladite gaine (12), de sorte à mesurer en temps réel la progression de la diffusion desdits gaz corrosifs dans l'épaisseur de ladite gaine d'étanchéité interne (12).

11. Manchette de contrôle selon la revendication 10, **caractérisée en ce que** le traducteur ultrasonore (10) est logé dans le capot cylindrique métallique (23), l'épaisseur résiduelle (h) du capot entre la face avant du traducteur et la surface externe de la gaine d'étanchéité interne étant supérieure à au moins trois fois l'épaisseur de ladite gaine.

12. Manchette de contrôle selon la revendication 10 ou 11, **caractérisée en ce qu'**elle comprend des premiers moyens de couplage de la face avant du traducteur ultrasonore (10) avec le capot cylindrique métallique (23) et des deuxièmes moyens de couplage entre la surface externe de la gaine d'étanchéité interne (12) et le capot cylindrique métallique (23).

13. Manchette de contrôle selon la revendication 12, **caractérisée en ce que** les deuxièmes moyens de couplage comprennent des moyens de couplage mécanique sous pression de la surface externe de la gaine d'étanchéité interne (12) avec une surface interne du capot cylindrique métallique (23).

14. Manchette de contrôle selon l'une quelconque des revendications 10 à 13, **caractérisée en ce que** le capot cylindrique métallique (23) comprend un circuit de drainage des gaz diffusant à travers la gaine d'étanchéité interne (12), ledit circuit de drainage comprenant un ensemble de rainures (31) formées sur une surface interne dudit capot (23) au niveau d'une interface avec une surface externe de la gaine d'étanchéité interne (12), ledit ensemble de rainures étant relié à une ouverture (33) apte à être fermée par un bouchon et communiquant vers l'extérieur de ladite manchette de contrôle, moyennant quoi la pression à laquelle est soumise ladite gaine d'étanchéité interne (12) peut être contrôlée.

15. Manchette de contrôle selon l'une quelconque des revendications 10 à 14, **caractérisée en ce qu'**elle comprend deux brides de connexion (21, 22), montées respectivement de part et d'autre dudit capot cylindrique métallique (23) et sur lesquelles sont adaptés à venir prendre appui des cônes de sertissage (25, 26) de ladite gaine d'étanchéité interne (12).

16. Conduite destinée au transport d'hydrocarbures contenant des gaz corrosifs, ladite conduite comportant au moins une manchette de contrôle (20) selon l'une quelconque des revendications 10 à 15, **caractérisée en ce que** ladite conduite comprend au moins une gaine d'étanchéité interne similaire à celle montée dans ladite manchette de contrôle, moyennant quoi on peut surveiller la progression de la diffusion des gaz corrosifs dans l'épaisseur de ladite gaine d'étanchéité interne de ladite conduite.

**Patentansprüche**

1. Verfahren zum Prüfen einer rohrförmigen Leitung für den Transport von korrosive Gase enthaltenden Kohlenwasserstoffen, wobei die Leitung mindestens eine innere Dichtungshülle (2) aus Polymermaterial umfasst, wobei die korrosiven Gase in der Lage sind, von einer Innenfläche (2b) zu einer Außenfläche (2a) der inneren Dichtungshülle (2) hin gemäß einem radialen Diffusionsphänomen in radialer Richtung zu diffundieren, wobei das Polymermaterial der Dichtungshülle (2) Reaktivverbindungselemente enthält, die in der Dicke der Hülle (2) dispergiert sind und zur Reaktion mit den korrosiven Gasen fähig sind, um sie gemäß einer Neutralisationsreaktion zu neutralisieren, wobei die Neutralisationsreaktion und das radiale Diffusionsphänomen einerseits eine erste Schicht (L1) bilden, in der die Reaktivverbindungselemente mit den korrosiven Gasen reagiert haben, wobei sich die erste Schicht (L1) von der Innenfläche (2b) aus progressiv in der Dicke der Hülle (2) erstreckt, und anderseits eine zweite Schicht (L2) der Restdicke der Hülle (2) bilden, in der die Reaktivverbindungselemente noch nicht mit den korrosiven Gasen reagiert haben, wobei sich die zweite Schicht (L2) zwischen der ersten Schicht (L1) und der Außenfläche der Hülle (2) erstreckt, wo durch Ultraschall die Position einer Schnittstelle (6) zwischen der ersten Schicht (L1) und der zweiten Schicht (L2) bestimmt wird, so dass die Progression der Diffusion der korrosiven Gase in der Dicke der inneren Dichtungshülle (2) in Echtzeit gemessen wird.

2. Prüfverfahren nach Anspruch 1, **dadurch gekennzeichnet, dass** es darin besteht, von der Außenfläche (2a) der inneren Dichtungshülle (2) in Richtung des Inneren der Leitung einen Ultraschallstrahl in der Form zu emittieren, dass der Ultraschallstrahl die Dicke der inneren Dichtungshülle zwischen ihrer Außenfläche (2a) und ihrer Innenfläche (2b) durchquert, Ultraschallwellen, die in der Dicke der Hülle durch die Schnittstelle (6) reflektiert werden, in Signalform aufzunehmen und die Signale zu verarbeiten, um die Bestimmung der Position der Schnittstelle (6) in der Dicke der inneren Dichtungshülle durchzuführen.

3. Verfahren nach Anspruch 2, **dadurch gekennzeichnet, dass** die zentrale Frequenz des Ultraschallstrahls zwischen 1,5 und 3 MHz, vorteilhafterweise zwischen 2 und 2,5 MHz, beträgt, dass die Pulsweite, gemessen bei -20 dB, zwischen 0,5 und 1,5 $\mu$s, vorteilhafterweise weniger als 1 $\mu$s, beträgt, dass die Bandbreite, gemessen bei -6 dB, zwischen 1 und 4 MHz beträgt und dass ein Spektrum verwendet wird, das einen ausreichenden Anteil an Niederfrequenzwellen in der Größenordnung von 1 MHz aufweist, deren Amplitudendifferenz relativ zu der zentralen Frequenz nicht weniger als 30 dB betragen darf.

4. Verfahren nach einem der Ansprüche 2 bis 3, **dadurch gekennzeichnet, dass** die Form des Ultraschallstrahls fokussiert wird und dass die Position des Fokuspunktes zu dem Boden der inneren Dichtungshülle hin oder darüber hinaus eingestellt wird.

5. Verfahren nach einem der vorhergehenden Ansprüche, **dadurch gekennzeichnet, dass** ein Ultraschallwandler des Piezoverbundtyps verwendet wird.

6. Verfahren nach Anspruch 4, **dadurch gekennzeichnet, dass** die Fokussierung durch Formung der Piezoverbundkomponente erhalten wird.

7. Verfahren nach einem der vorhergehenden Ansprüche, **dadurch gekennzeichnet, dass** ein Mosaik aus Elementarwandlern in Form eines zweidimensionalen quadratischen oder ringförmigen Musters verwendet wird.

8. Verfahren nach Anspruch 7, **dadurch gekennzeichnet, dass** der Ultraschallstrahl durch eine elektronische Phasenverschiebungstechnik gesteuert wird.

9. Verfahren nach einem der vorhergehenden Ansprüche, **dadurch gekennzeichnet, dass** die Reaktivverbindung aus ZnO, PbO, CuO, CdO, NiO, SnO$_2$ und MoO$_3$ ausgewählt ist.

10. Prüfmanschette (20), die in Reihe mit einer rohrförmigen Leitung für den Transport von korrosive Gase enthaltenden Kohlenwasserstoffen verbindbar ist, umfassend von innen nach außen mindestens eine innere Dichtungshülle (12) und eine zylindrische Metallhaube (23), die um die innere Dichtungshülle (12) herum montiert ist, wobei die innere Dichtungshülle (12) aus einem Polymermaterial realisiert ist, das Reaktivverbindungselemente enthält, die in der Dicke der Hülle dispergiert sind und zur Reaktion mit korrosiven Gasen fähig sind, um sie zu neutralisieren, wobei die korrosiven Gase in der Lage sind, von einer Innenfläche zu einer Außenfläche der inneren Dichtungshülle hin in radialer Richtung zu diffundieren, indem sie einerseits eine erste Schicht bilden, in der die Reaktivverbindungselemente mit den korrosiven Gasen reagiert haben, wobei sich die erste Schicht von der Innenfläche aus progressiv in der Dicke der Hülle (12) erstreckt, und anderseits eine zweite Schicht der Restdicke der Hülle bilden, in der die Reaktivverbindungselemente noch nicht mit den korrosiven Gasen reagiert haben, wobei sich die zweite Schicht zwischen der ersten Schicht und der Außenfläche der Hülle erstreckt, wobei die Prüfmanschette (20) ferner einen integrierten Ultraschallwandler (10) zum Bestimmen der Position einer Schnittstelle zwischen der ersten Schicht und der zweiten Schicht der Dicke der Hülle (12) umfasst, so dass die Progression der Diffusion der korrosiven Gase in der Dicke der inneren Dichtungshülle (12) in Echtzeit gemessen wird.

11. Prüfmanschette nach Anspruch 10, **dadurch gekennzeichnet, dass** der Ultraschallwandler (10) in der zylindrischen Metallhaube (23) aufgenommen ist, wobei die Restdicke (h) der Haube zwischen der Vorderseite des Wandlers und der Außenfläche der inneren Dichtungshülle größer als mindestens das Dreifache der Dicke der Hülle ist.

12. Prüfmanschette nach Anspruch 10 oder 11, **dadurch gekennzeichnet, dass** sie erste Mittel zum Kuppeln der Vorderseite des Ultraschallwandlers (10) mit der zylindrischen Metallhaube (23) und zweite Mittel zum Kuppeln zwischen der Außenfläche der inneren Dichtungshülle (12) und der zylindrischen Metallhaube (23) umfasst.

13. Prüfmanschette nach Anspruch 12, **dadurch gekennzeichnet, dass** die zweiten Kupplungsmittel Mittel zum mechanischen Druckkuppeln der Außenfläche der inneren Dichtungshülle (12) mit einer Innenfläche der zylindrischen Metallhaube (23) umfassen.

14. Prüfmanschette nach einem der Ansprüche 10 bis 13, **dadurch gekennzeichnet, dass** die zylindrische Metallhaube (23) einen Kreislauf zum Ableiten der durch die innere Dichtungshülle (12) hindurch diffundierenden Gase umfasst, wobei der Ableitungskreislauf eine Anordnung von Nuten (31) umfasst, die auf einer Innenfläche der Haube (23) im Bereich einer Schnittstelle mit einer Außenfläche der inneren Dichtungshülle (12) gebildet sind, wobei die Anordnung von Nuten mit einer Öffnung (33) verbunden ist, die durch einen Stopfen verschließbar ist und mit außerhalb der Prüfmanschette kommuniziert, wodurch der Druck, dem die innere Dichtungshülle (12) ausgesetzt ist, gesteuert werden kann.

15. Prüfmanschette nach einem der Ansprüche 10 bis 14, **dadurch gekennzeichnet, dass** sie zwei Verbindungsflansche (21, 22) umfasst, die auf der einen bzw. der anderen Seite der zylindrischen Metallhaube (23) montiert sind und auf denen Keile zum Quetschen (25, 26) der inneren Dichtungshülle (12) zur Abstützung kommen können.

16. Leitung für den Transport von korrosive Gase enthaltenden Kohlenwasserstoffen, wobei die Leitung mindestens eine Prüfmanschette (20) nach einem der Ansprüche 10 bis 15 aufweist, **dadurch gekennzeichnet, dass** die Leitung mindestens eine innere Dichtungshülle ähnlich derjenigen umfasst, die in der Prüfmanschette montiert ist, wodurch die Progression der Diffusion der korrosiven Gase in der Dicke der inneren Dichtungshülle der Leitung überwacht werden kann.

**Claims**

1. A method for monitoring a tubular pipe intended to transport hydrocarbons containing corrosive gases, said pipe comprising at least one internal polymer sheath (2) into which said corrosive gases are liable to diffuse radially from an inner surface (2b) to an outer surface (2a) of said internal sheath (2) via a radial diffusion effect, said polymer of said sheath (2) incorporating reactive-compound elements dispersed through the thickness of said sheath (2) and able to react with said corrosive gases in order to neutralize them via a neutralizing reaction, said neutralizing reaction and said radial diffusion effect forming, on the one hand, a first layer (L1) in which said reactive-compound elements have reacted with said corrosive gases, said first layer (L1) gradually extending through the thickness of said sheath (2) from said inner surface (2b) and, on the other hand, a second layer (L2) occupying the residual thickness of said sheath (2), in which said reactive-compound elements have still not reacted with said corrosive gases, said second layer (L2) extending between said first layer (L1) and said outer surface of said sheath (2), wherein the position of an interface (6) between said first layer (L1) and said second layer (L2) is determined using ultrasound, so as to measure, in real time, the progression of the diffusion of said corrosive gases through the thickness of said internal sheath (2).

2. The monitoring method as claimed in claim 1, **characterized in that** it consists in emitting, from the outer side (2a) of said internal sheath (2), in the direction of the interior of said pipe, an ultrasound beam, so that the ultrasound beam passes through the thickness of said internal sheath between its outer surface (2a) and its inner surface (2b), in collecting ultrasonic waves reflected in the thickness of said sheath by said interface (6), in the form of signals, and processing said signals so as to determine the position of said interface (6) in the thickness of said internal sheath.

3. The method as claimed in claim 2, **characterized in that** the central frequency of the ultrasound beam lies between 1.5 and 3 MHz and advantageously between 2 and 2.5 MHz, and **in that** the pulse width, measured at - 20 dB, lies between 0.5 and 1.5 $\mu$s and is advantageously smaller than 1 $\mu$s, and **in that** the bandwidth, measured at -6 dB, lies between 1 and 4 MHz, and **in that** a spectrum is used comprising a sufficiently large number of waves with a low frequency of about 1 MHz the amplitude difference of which, relative to the central frequency, must not be less than 30 dB.

4. The method as claimed in either one of claims 2 and 3, **characterized in that** the shape of the ultrasound beam is focused and **in that** the beam focal point is positioned toward or beyond the bottom of said internal sheath.

5. The method as claimed in any one of the preceding claims, **characterized in that** a piezocomposite ultrasonic transducer is used.

6. The method as claimed in claim 4, **characterized in that** the focus is achieved by shaping the piezocomposite component itself.

7. The method as claimed in any one of the preceding claims, **characterized in that** a square-shaped or annular two-dimensional array of elementary transducers is used.

8. The method as claimed in claim 7, **characterized in that** the ultrasound beam is controlled using an electronic phase-shift technique.

9. The method as claimed in any one of the preceding claims, **characterized in that** the reactive compound is chosen from ZnO, PbO, CuO, CdO, NiO, SnO$_2$ and MoO$_3$.

10. A monitoring section (20) able to be connected in series with a tubular pipe intended to transport hydrocarbons containing corrosive gases, comprising, from the interior to the exterior, at least one internal sheath (12) and a cylindrical metal cover (23) fitted around said internal sheath (12), said internal sheath (12) being made of a polymer incorporating reactive-compound elements dispersed through the thickness of said sheath and able to react with corrosive gases in order to neutralize them, said corrosive gases being liable to diffuse radially from an inner surface toward an outer surface of said internal sheath, thereby forming, on the one hand, a first layer in which said reactive-compound elements have reacted with said corrosive gases, said first layer gradually extending through the thickness of said sheath (12) from said inner surface and, on the other hand, a second layer occupying the residual thickness of said sheath, in which said reactive-compound elements have still not reacted with said corrosive gases, said second layer extending between said first layer and said outer surface of said sheath, said monitoring section (20) comprising also an integrated ultrasonic transducer (10) able to determine the position of an interface between said first layer and said second layer occupying some thickness of said sheath (12) using ultrasound so as to measure, in real time, the progression of the diffusion of said corrosive gases through the thickness of said internal sheath (12).

11. The monitoring section as claimed in claim 10, **characterized in that** the ultrasonic transducer (10) is housed in the cylindrical metal cover (23), the residual thickness (h) of the cover left between the front side of the transducer and the outer surface of the internal sheath being larger than at least three times the thickness of said sheath.

12. The monitoring section as claimed in either of claims 10 or 11, **characterized in that** it comprises first means for coupling the front side of the ultrasonic transducer (10) to the cylindrical metal cover (23) and second means for coupling the outer surface of the internal sheath (12) to the cylindrical metal cover (23).

**13.** The monitoring section as claimed in claim 12, **characterized in that** the second coupling means comprise pressurized means for mechanically coupling the outer surface of the internal sheath (12) to an inner surface of the cylindrical metal cover (23).

**14.** The monitoring section as claimed in any one of claims 10 to 13, **characterized in that** the cylindrical metal cover (23) comprises a circuit for draining gases diffusing through the internal sheath (12), said draining circuit comprising a set of grooves (31) formed on an inner surface of said cover (23) at an interface with an outer surface of the internal sheath (12), said set of grooves being connected to an aperture (33) able to be closed by a stopper and communicating with the exterior of said monitoring section, by means of which the pressure to which said internal sheath (12) is subjected may be controlled.

**15.** The monitoring section as claimed in any one of claims 10 to 14, **characterized in that** it comprises two connecting flanges (21, 22) respectively fitted at either end of said cylindrical metal cover (23) and on which flanges crimping cones (25, 26) are arranged to bear against said internal sheath (12).

**16.** A pipe intended to transport hydrocarbons containing corrosive gases, said pipe comprising at least one monitoring section (20) as claimed in any one of claims 10 to 15, **characterized in that** said pipe comprises at least one internal sheath similar to that fitted in said monitoring section, by means of which it is possible to monitor the progression of the diffusion of the corrosive gases through the thickness of said internal sheath of said pipe.

X'

5

4

**Fig.1**

3

2

1

X

**Fig.2**

10

2

2a

L2 {

L1 {

6

X'

2b

X

signal

6

**Fig.3**

temps

2a

2b

Fig.4

Fig.5

Fig.6a

Fig.6b

44a

20

21

10

22

42a

42

41

40

Fig.7

## RÉFÉRENCES CITÉES DANS LA DESCRIPTION

**Documents brevets cités dans la description**

- EP 0844429 A
- WO 2009106078 A
- FR 2835517
- GB 2462078 A
- WO 0077587 A